# EUROPÄISCHE PATENTSCHRIFT

(11) **EP 3 116 667 B1**
(45) Veröffentlichungstag und Bekanntmachung des Hinweises auf die Patenterteilung: **24.06.2020**
(21) Anmeldenummer: 15708198.5
(22) Anmeldetag: 05.03.2015
(51) Int. Cl.: B21B 35/14, F16D 1/02

(54) **WELLE-NABE-VERBINDUNG UND ANTRIEBSANORDNUNG MIT EINER DERARTIGEN WELLE-NABE-VERBINDUNG**
SHAFT-HUB CONNECTION AND DRIVE ARRANGEMENT HAVING SUCH A SHAFT-HUB CONNECTION
LIAISON ARBRE-MOYEU ET DISPOSITIF D'ENTRAÎNEMENT COMPORTANT UNE TELLE LIAISON ARBRE-MOYEN

(30) Priorität: 12.03.2014 DE 102014204529
(43) Veröffentlichungstag der Anmeldung: 18.01.2017
(73) Patentinhaber: Voith Patent GmbH, 89522 Heidenheim (DE)
(72) Erfinder: MAIER, Dieter, 89537 Giengen (DE); GRAWENHOF, Peter, 89547 Dettingen (DE); STOCKER, Jürgen, 73466 Lauchheim (DE); WITTMANN, John Patrick, 91088 Bubenreuth (DE)
(74) Vertreter: Voith Patent GmbH - Patentabteilung
(86) Internationale Anmeldenummer: PCT/EP2015/054555
(87) Internationale Veröffentlichungsnummer: WO 2015/135818

(56) Entgegenhaltungen:
- FR-A- 1 485 614
- US-A- 3 315 993
- US-A- 4 064 708

## Beschreibung

Die Erfindung betrifft eine Welle-Nabe-Verbindung, im Einzelnen mit den Merkmalen aus dem Oberbegriff des Anspruchs 1. Die Erfindung betrifft ferner eine Antriebsanordnung mit einer erfindungsgemäß ausgebildeten Welle-Nabe-Verbindung.

Drehfeste, d.h. im Sinne von drehmomentübertragend, formschlüssige schnell lösende Verbindungen zwischen antreibenden und angetriebenen Bauteilen, insbesondere zwischen einem Wellenzapfen und einer Arbeitswalze und dem auf diesen aufgesetzten Treffer für den Einsatz in Walzwerken sind in einer Vielzahl von Ausführungen aus dem Stand der Technik bekannt. Unter einem Treffer wird dabei eine Verbindungseinheit zwischen einer Gelenkwelle und einem Wellenzapfen verstanden, wobei diesem weitere Funktionen zuordenbar sind. Stellvertretend wird hier beispielhaft auf Ausführungen aus den Druckschriften DE 950 782, DE 197 10 554 A1 und DE 197 10 552 A1 verwiesen. Bei diesen Ausführungen erfolgt die Übertragung eines anstehenden Drehmomentes durch Formschluss zwischen Mitnahmeflächen am Wellenzapfen und dem jeweiligen Anschlusselement in Form eines Treffers. Die Arbeitswalze ist wenigstens mittelbar mit einer Antriebsmaschine über eine Gelenkwelle gekoppelt. Da in Walzwerken die Walzen regelmäßig nachgeschliffen werden müssen, ist zwischen der jeweiligen Arbeitswalze und der Gelenkwelle eine Anschlusstechnik erforderlich, die ein schnelles Verbinden und Lösen ermöglicht und verschleißarm ist. Bei herkömmlichen derartigen Verbindungen sieht eine übliche Ausbildung nach dem Stand der Technik vor, die Nabe und einen zuordenbaren Wellenzapfen als Teil einer formschlüssigen Kupplung mit ineinandergreifenden Kupplungspassflächen sowie mit zusätzlich einlegbaren Verschleißplatten mit Passungsspiel auszubilden. Die Drehmomentübertragung erfolgt über den mit der Nabe formschlüssig verbundenen Flachzapfen. Das vorhandene Passungsspiel ist zwar für die Montage vorteilhaft, führt jedoch zu dynamischen Drehmomentüberhöhungen im Walzbetrieb und dadurch zu einem starken Verschleiß der Treffernabe und Verschleißplatten sowie hohen Belastungsspitzen am Antriebsaggregat, die auch die Qualität des Walzgutes stark beeinträchtigen können.

Die Druckschrift DE 197 10 554 A1 schlägt daher vor, zur Herstellung eines spielfreien Formschlusses zwischen den Passflächen in einem zwischen diesen ausgebildeten keilförmigen Aufnahmespalt federbelastete Keilplatten einzulegen, wobei die Keilfläche in Längsrichtung des Wellenzapfens und damit auch in Längsrichtung bzw. Richtung der Längsachse des Zapfenaufnehmers ausgebildet ist. Die federbelasteten Keilplatten werden dabei beim Einfahren der Walze axial und zugleich durch ihre Keilform radial verschoben und klemmen so den Wellenzapfen gegen seine Anlagefläche am Treffer. Hierbei kann die Drehmomentübertragung formschlüssig über den Flachzapfen erfolgen. Konstruktiv ist die Stelleinrichtung für die Einstellung der Keilplatten zu berücksichtigen. Die Ausführung ist relativ aufwendig und eine Nachstellung bei Verschleiß ist nicht oder nur sehr bedingt möglich.

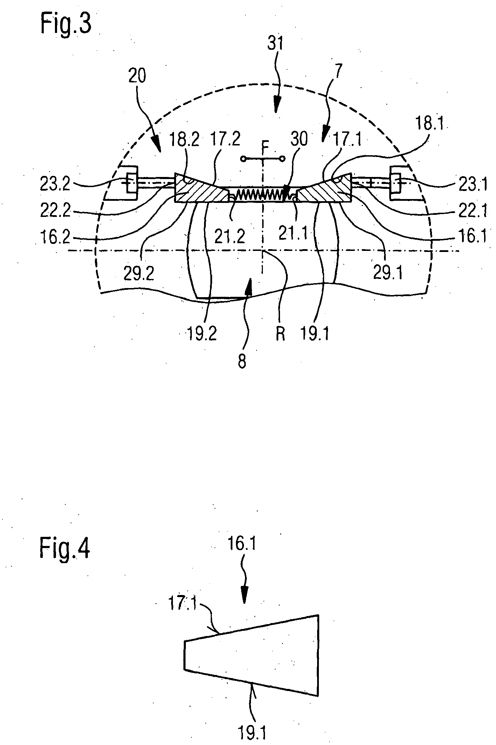

Aus der 1 963 213, die zur FR 1 485 614 korrespondiert, ist eine Wellen-Naben Verbindung bekannt. Die Welle wird durch in Längsrichtung, Figur 3, der Welle ausgerichtete Keilelemente fixiert. Die Keilelemente werden ihrerseits durch ein Gegenkeilelement im Endbereich der Welle fixiert. Die Keile bestehen aus einem Stahl von besserer Qualität als die Hülse, in der die Welle fixiert wird.

Aus der DE 1 192 885 ist eine Keilverbindung zwischen einer Welle und einer Nabe mit einem tangential und radial beweglichen Keilpaar bekannt. Das Keilpaar wird mittels einer parallel zur Rotationsachse angeordneten Spannschraube in einer in der Nabe/ Welle angeordneten Nut verspannt. Dadurch wird eine spielfreie Verbindung hergestellt. Zum Lösen der Keilverbindung nach dem Lockern oder Entfernen der Spannschraube sind Federn für das Lockern der Klemmkeile vorgesehen.

Aus der US 4,064,708 ist eine Wellen-Nabenverbindung bekannt, bei der zwei in Achsrichtung bzw. Längsrichtung der Welle ausgerichtete Keilplatten vorgesehen sind, die gegeneinander vorgespannt sind, um eine feste Verbindung von Welle und Nabe bereitzustellen. an den seitlichen Enden der Keilplatten sind Positionsschrauben vorgesehen, um die Lage der Keilplatten in Umfangrichtung zu sichern.
Aus der US 3,315,993 ist eine Wellen-Zapfen Verbindung bekannt, bei der ein Zapfen durch ein Keilelement fixiert wird. Die Keilfläche dieses Keilelementes ist senkrecht zur Rotationsachse der Wellen angeordnet. Zur Fixierung der Welle wird das Keilelement durch Schraubverbindungen senkrecht zur Rotationachse bewegt. Bei Verschleiß kann das Keilelement und eine vorgesehene Verschleißplatte ausgetauscht werden. Auch bei dieser Anordnung ist ein Lösen der Keilverbindung für ein Lösen der Wellen-Zapfen Verbindung vorgesehen. Der Oberbegriff von Anspruch 1 basiert auf der US 3,315,993.
Aus der US 3,578,363 ist eine Wellen-Zapfen Verbindung bekannt, bei der der Zapfen durch einen Klemmmechanismus mit einem Keilelement, arretiert wird. Das Keilelement ist senkrecht zur Rotationsachse angeordnet und wird für eine Arretierung des Zapfens durch Schrauben in eine Klemmstellung verschoben. Zum Lösen der Arretierung ist ein Federelement vorgesehen, durch das das Keilelement zur Verringerung des Kraftschlusses mit einer Rückstellkraft beaufschlagt ist. Werden die Arretierschrauben gelöst, so bewegt sich das Keilelement in eine Ausgangsstellung zurück.
Aus der DE 89 05 222 ist eine Naben-Wellen-Klemmverbindung mit einem Spannkeil bekannt. Durch eine mit dem Spannkeil in Wirkverbindung stehenden Spreizschraube kann eine Klemmung erreicht werden. Durch Spreizung der Spreizschraube wird eine form- und kraftschlüssige Verbindung hergestellt.
Nachteilige ist bei den aus dem Stand der Technik bekannten Lösungen, dass für ein Lösen der Welle-Nabe-Verbindung ein Lösen von Verbindungselementen erforderlich ist, wodurch die Stillstandzeit verlängert wird.

Der Erfindung lag daher die Aufgabe zugrunde, eine Verbindungstechnik für eine formschlüssige Welle-Nabe-Verbindung zu schaffen, die einerseits die Auslegung der Bauteile und Positionierung bei Montage mit dem erforderlichen Spiel erlaubt und ferner während der Betriebsdauer mit der resultierenden Spielvergrößerung immer wieder auf ein vordefiniertes Spiel nachgestellt werden kann. Die Verbindungstechnik soll insbesondere den Anforderungen an den Einsatz in Walzwerken gerecht werden und ein einfaches und schnelles Verbinden und Lösen des Antriebsstranges erlauben. Des Weiteren soll der Prozess des Verbindens bzw. Lösens sehr robust und wenig störanfällig sein, sodass zusätzliche Stillstandszeiten der Anlage auf ein Minimum reduziert werden.

Die erfindungsgemäße Lösung wird durch die Merkmale der Ansprüche 1 und 13 charakterisiert. Vorteilhafte Ausgestaltungen sind in den Unteransprüchen wiedergegeben.

Eine Welle-Nabe-Verbindung, insbesondere Wellenzapfen-Trefferverbindung für den Einsatz in Walzwerken, wobei zumindest ein Teilbereich einer um eine in Längsrichtung verlaufende Rotationsachse rotierbaren Welle mit einem Zapfenaufnehmer unter Ausbildung eines Verbindungsbereiches formschlüssig ineinandergreifend zueinander angeordnet sind und zwischen Welle und Zapfenaufnehmer eine, zumindest ein Nachstellelement zur Einstellung eines Spiels und eine diesem zugeordnete Stelleinrichtung aufweisende Nachstelleinrichtung vorgesehen ist, wobei das Nachstellelement zumindest eine mit einer der Anschlusskomponenten - Zapfenaufnehmer und/oder Welle bei Drehmomentübertragung zusammenwirkende Keilfläche umfasst. Die einzelne Keilfläche am Nachstellelement ist senkrecht zur Längsrichtung des Zapfenaufnehmers ausgerichtet und wobei die Nachstelleinrichtung zur Einstellung eines vorbestimmten Spiels vorgesehen ist.
Bevorzugt erfolgt eine Nachstellung auf ein vorbestimmtes Minimalspiel, wenn ein Walzenwechsel durchgeführt wird. In der Regel erfolgt ein Walzenwechsel täglich. Beim Walzenwechsel kann das vorhandene Spiel ohne eine zusätzliche Unterbrechung des Betriebes ermittelt werden. Wenn das tatsächliche Spiel ein vorbestimmtes Maß, vorzugsweise im Bereich von 0,4mm bis 0,5 mm, überschreitet, erfolgt eine Nachstellung auf das vorbestimmte Minimalspiel, vorzugsweise im Bereich von 0,2 bis 0,3 mm.

Unter Ausrichtung der Keilfläche wird dabei insbesondere der Verlauf bzw. Neigungsrichtung der Keilfläche verstanden. Entscheidend ist, dass die Verlaufsrichtung der Keilfläche von der Verlaufsrichtung der Längsachse des Zapfenaufnehmers abweicht, vorzugsweise quer zu dieser ausgerichtet ist.

Erfindungsgemäß verläuft die Keilfläche somit nicht in Längsrichtung des Zapfenaufnehmers sondern quer zu dieser bzw. zu einer Ebene, die durch die Längsachse des Zapfenaufnehmers und in einer Senkrechten zu dieser beschreibbar ist. Es besteht die Möglichkeit, die an den Nachstellelementen wirksame Stelleinrichtung von der Stirnseite des Zapfenaufnehmers in beliebige Bereiche in Längsrichtung des Zapfenaufnehmers in Umfangsrichtung um die Längsachse des Zapfenaufnehmers zu verlagern. Dadurch sind zum einen größere Flächenbereiche an den Nachstellelementen realisierbar, die Stelleinrichtungen besser zugängig und die Nachstellelemente hinsichtlich ihrer Wirkungsweise einfacher nachstellbar. Im Vergleich zu einer spielfreien Verbindung hat die Verbindung mit einem vorbestimmten Spiel den Vorteil, dass ein Arbeitsschritt eines Lösens einer spielfreien Verbindung zur Entnahme der Welle aus der Trefferverbindung nicht erforderlich ist. Der Walzenwechsel ist damit einfacher durchzuführen.

Gemäß einer besonders vorteilhaften Weiterentwicklung umfasst die einzelne Nachstelleinrichtung zumindest zwei derartige Nachstellelemente, die beidseitig der Ebene, gebildet von der Längsrichtung des Zapfenaufnehmers und einer Senkrechten zu dieser angeordnet sind. Bevorzugt erfolgt die Anordnung der Ausgleichelemente symmetrisch. Dies bedingt einen symmetrischen Aufbau auch des Zapfenaufnehmers, sodass Unwuchten vermieden werden.

In einer vorteilhaften Ausbildung ist die Welle im Verbindungsbereich mit dem Zapfenaufnehmer als Flachzapfen ausgeführt, umfassend zwei parallel zueinander angeordnete Flachseiten. Zwischen jeder Flachseite und dem Zapfenaufnehmer ist eine Nachstelleinrichtung vorgesehen, wobei bei Nachstelleinrichtungen mit mehreren Nachstellelementen die mit den Anschlusskomponenten zusammenwirkenden Keilflächen der einer Flachseite zugeordneten Nachstellelemente vorzugsweise einander entgegengesetzt ausgerichtet sind.

Umfasst die einzelne Nachstelleinrichtung lediglich ein Nachstellelement, ist die Verbindung durch zumindest zwei Nachstellelemente charakterisiert, wobei jeweils eines der Nachstellelemente zwischen einer Flachseite und dem Zapfenaufnehmer angeordnet ist. Bei Ausführungen der Nachstelleinrichtungen mit zwei oder mehreren Nachstellelementen sind dann jeder Flachseite zumindest zwei oder mehrere Nachstellelemente zugeordnet.
Besonders vorteilhaft erfolgt die Anordnung der Nachstellelemente symmetrisch bezüglich zweier senkrecht zueinander ausgerichteter Ebenen, wobei jede der Ebenen durch die Längsachse des Zapfenaufnehmers und einer Senkrechten zu dieser charakterisiert ist.

Aus konstruktiven Gründen und um den Aufwand für die Integration der Stelleinrichtungen gering zu halten, erstreckt sich ein einzelnen Nachstellelement vorzugsweise über einen Großteil des Verbindungsbereiches, besonders bevorzugt vollständig über diesen. Denkbar sind jedoch auch eine Mehrzahl in Längsrichtung der Welle, insbesondere des Wellenzapfens und damit des Zapfenaufnehmers einander benachbart angeordneter derartiger Nachstellelemente, wobei auch hier die beidseitige Anordnung, vorzugsweise eine symmetrische Anordnung, bevorzugt ist. Gemäß einer besonders vorteilhaften Weiterentwicklung ist es vorgesehen, die Nachstellelemente selbst als Verschleißplatten auszuführen, d. h. diese sind durch eine geringere Härte charakterisiert als die Anschlusskomponenten. Dies bietet den Vorteil, dass lediglich die Nachstellelemente als verschleißende Elemente auszutauschen sind und auf einen Austausch der anderen Komponenten weitgehend verzichtet werden kann.

Die Ausführung der Keilflächen erfolgt zumindest an einer Seite der Nachstellelemente, wobei diese Fläche mit einer entsprechend ausgebildeten Keilfläche an einem Anschlusselement, welches vom Zapfenaufnehmer oder dem Wellenzapfen gebildet werden kann, zusammenwirkt. In besonders vorteilhafter Ausbildung ist die Keilfläche an der zum Zapfenaufnehmer gerichteten Seite vorgesehen, um hier auf standardisierte Wellenzapfen, insbesondere in Form von Flachzapfen, zurückgreifen zu können.

Zur Einstellung des Spiels, insbesondere auf ein zulässiges Minimalspiel umfasst die Nachstelleinrichtung neben der Stelleinrichtung eine Vorspanneinrichtung zum wenigstens indirekten Aufbringen einer Vorspannkraft auf das einzelne Nachstellelement. Dadurch ist das Nachstellelement gegenüber zumindest einem der Anschlusselemente - Zapfenaufnehmer und/oder Welle - und/oder einem weiteren Nachstellelement mit Vorspannung eingebaut. Die durch die Vorspanneinrichtung aufbringbare Vorspannkraft ist mit zumindest einer Richtungskomponente entgegen der von der Stelleinrichtung am Nachstellelement wirksamen Stellkraft ausgerichtet. Die Vorspanneinrichtung wirkt mit wenigstens einem der Nachstellelemente zusammen, wobei die Vorpanneinrichtung gemäß zumindest einer der nachfolgend genannten Möglichkeiten oder einer Kombination aus diesen ausgeführt sein kann:
- eine hydraulische Stelleinrichtung
- eine pneumatische Stelleinrichtung
- eine elektronische Stelleinrichtung
- eine mechanische Stelleinrichtung.

Gemäß einer konstruktiv besonders einfachen Ausbildung umfasst die Vorspanneinrichtung zumindest eine zwischen Nachstellelement und Anschlusskomponente und/oder einem weiteren Nachstellelement angeordnete Federeinheit.

Vorzugsweise ist die Stelleinrichtung derart ausgebildet und ausgelegt, dass diese geeignet ist, eine Nachstellung auf ein vordefiniertes Minimalspiel zwischen Nachstellelement und Anschlusskomponente zu ermöglichen. Die Einstellung des Minimalspiels erfolgt durch Verschieben des Keils entgegen der Vorspannkraft mit Hilfe der Stelleinrichtung. Das Minimalspiel gewährleistet eine einwandfreie Funktion der lösbaren Verbindung im Betrieb.

Bezüglich des konkreten konstruktiven Aufbaus der Stelleinrichtung besteht eine Mehrzahl von Möglichkeiten. Diese umfasst vorzugsweise zumindest eine Einrichtung, welche derart ausgeführt und angeordnet ist, eine am einzelnen Nachstellelement wenigstens mittelbar wirksame Stellkraft aufzubringen. Die Einrichtung kann dazu zumindest ein, einem Nachstellelement zugeordnetes Spannelement umfassen, welches im Zapfenaufnehmer sich an diesem abstützend geführt oder gelagert ist und an einem Flächenbereich des Nachstellelementes angreift. Als Spannelemente kommt vorzugsweise zumindest ein Element, ausgewählt aus der nachfolgenden Gruppe zum Einsatz:
- ein elastisches Element, insbesondere eine Federeinheit
- einem Kolbenelement, welches mit einer Kraft, erzeugt gemäß einer Möglichkeit oder einer Kombination aus der nachfolgend genannten Gruppe beaufschlagt wird:
- hydraulisch
- pneumatisch
- elektronisch
- mechanisch
- eine Spannschraube.

Die einzelne mit Vorspannung auf das einzelne Nachstellelement entgegen zur Stellkraft wirkende Vorspanneinrichtung umfasst im einfachsten Fall zumindest eine zwischen zwei in Querrichtung zu einer Ebene, gebildet von der Rotationsachse des Zapfenaufnehmers und einer Senkrechten, angeordneten Nachstellelementen angeordnete Federeinheit. Eine alternative Ausführung sieht eine am Nachstellelement oder an einem mit diesem zusammenwirkenden Kolben wirksame hydraulische Stelleinrichtung vor.

Ein erfindungsgemäß ausgestalteter Zapfenaufnehmer, insbesondere Treffer, für eine drehfeste Welle-Nabe-Verbindung für den Einsatz in Walzwerken mit einer in Längsrichtung verlaufenden Öffnung zur Aufnahme eines Wellenzapfens einer um eine Rotationsachse rotierbaren Welle, insbesondere gemäß einem der Ansprüche 1 bis 12, ist dadurch gekennzeichnet, dass an der durch die Öffnung beschreibbaren Umfangsfläche hier zumindest eine keilförmig ausgebildete Fläche zum Zusammenwirken mit einem Nachstellelement einer Nachstelleinrichtung vorgesehen ist.

Bei einer erfindungsgemäßen Antriebsanordnung für ein Walzwerk zum Antrieb zumindest einer Arbeitswalze, welche über eine Gelenkwelle mit einer Antriebsmaschine gekoppelt ist, wobei zwischen Gelenkwelle und Arbeitswalze eine Verbindungseinrichtung in Form eines Treffers vorgesehen ist, ist die Verbindung zwischen dem Treffer und der Arbeitswalze als Welle-Nabe-Verbindung gemäß einem der Ansprüche 1 bis 12 mit vordefinierten Spiel ausgeführt. Diese Lösung bietet gerade in Walzwerksantrieben den Vorteil, die erforderlichen Wechselintervalle, die eine Betriebsunterbrechung bedingen, zu verlängern.

Die erfindungsgemäße Lösung wird nachfolgend anhand von Figuren erläutert. Darin ist im Einzelnen Folgendes dargestellt:
- Figur 1: verdeutlicht beispielhaft einen Antriebsstrang mit einer erfindungsgemäß ausgeführten Welle-Nabe-Verbindung zwischen einem Zapfenaufnehmer und einem Wellenzapfen;
- Figuren 2a und 2b: zeigen beispielhaft die Einzelkomponenten Welle, insbesondere Wellenzapfen und Zapfenaufnehmer;
- Figur 3: zeigt eine vorteilhafte Ausbildung einer Nachstelleinrichtung mit mechanischer Stelleinrichtung und Vorspanneinrichtung;
- Figur 4: zeigt beispielhaft ein Nachstellelement mit zwei Keilflächen.

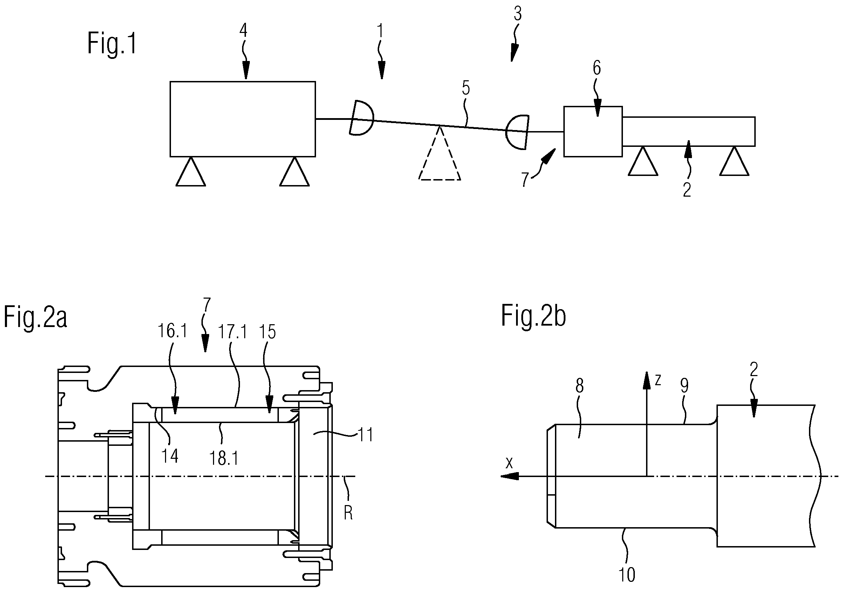

Die Figur 1 verdeutlicht in schematisiert vereinfachter Darstellung den Aufbau eines Antriebsstranges 1 zum Antrieb von zumindest einer Walze 2, welche in einer besonders vorteilhaften Anwendung in Walzwerken 3 als Arbeitswalze zum Einsatz gelangt. Der Antriebsstrang 1 umfasst zumindest eine Antriebsmaschine 4, welche zum Ausgleich von Lageungenauigkeiten über eine Gelenkwelle 5 in Form einer sogenannten Schwergelenkwelle wenigstens mittelbar mit der Arbeitswalze verbunden ist. Die Verbindung erfolgt über eine Welle-Nabe-Verbindung 6, wobei die Nabe entweder vom Gelenkwellenflansch selbst ausgebildet sein kann oder aber in einer besonders vorteilhaften Ausführung von einer separaten, mit der Gelenkwelle 5 drehfest verbundenen Nabe gebildet wird. Derartige, zwischen einer Gelenkwelle 5 und einer Arbeitswalze 2 in Walzwerken 3 zum Einsatz gelangende Verbindungseinheiten werden auch als Treffer bezeichnet. Die Nabe bzw. der Treffer fungiert dabei als sogenannter Zapfenaufnehmer 7. Die Verbindung mit der Arbeitswalze 2 erfolgt dabei zwischen dem Zapfenaufnehmer 7 und der Welle, insbesondere einem Wellenzapfen 8 der Arbeitswalze 2. Die Welle-Nabe-Verbindung 6 ist als formschlüssige Verbindung ausgeführt. In der Regel werden die Wellenzapfen 8 als sogenannte Flachzapfen ausgeführt. Ein Flachzapfen ist durch zwei einander gegenüberliegende und parallel zueinander angeordnete Flachseiten 9 und 10 beschreibbar. Die Verbindung zwischen den einzelnen Flachseiten 9 und 10 am Wellenzapfen 8 ist durch einen Übergangsbereich charakterisiert, welcher beispielsweise durch einen Radius beschreibbar sein kann. Die Welle-Nabe-Verbindung 6 wird durch das Einführen zumindest eines Teilbereiches des Flachzapfens in Längsrichtung der Arbeitswalze 2 betrachtet in eine dazu komplementäre Ausnehmung, insbesondere Öffnung 11 am Zapfenaufnehmer 7 realisiert. Um ein problemloses Ein- bzw. Ausfahren des Flachzapfens zu gewährleisten, ist zwischen dem Flachzapfen und dem Zapfenaufnehmer 7 immer eine Spiel- oder Übergangspassung erforderlich. Zur Einstellung eines minimalen Spiels zwischen Wellenzapfen 8 und Zapfenaufnehmer 7 ist eine Nachstelleinrichtung 15 vorgesehen. Diese umfasst zumindest ein Nachstellelement 16.1, hier 16.1 und 16.2, welches derart ausgeführt und angeordnet ist, den Flachzapfen gegen den Innenumfang 14 der Öffnung 11 des Zapfenaufnehmers 7 unter Einstellung eines Minimalspiels zu verspannen. Das Minimalspiel entspricht dem Spiel, welches erforderlich ist, um den Wellenzapfen 8 gerade noch in den Zapfenaufnehmer 7 einführen zu können. Das Spiel wird über eine gegen eine Vorspanneinrichtung 31 wirksame Stelleinrichtung 24 eingestellt.

Während des Betriebes kommt es jedoch verschleißbedingt zu einer Vergrößerung des Spiels zwischen den Nachstellelementen und den Anschlusskomponenten - Zapfenaufnehmer und Wellenzapfen, welches über die Nachstelleinrichtung 15 minimierbar bzw. nacheinstellbar ist. Je nach Ausführung der Stelleinrichtung kann die Nachstellung während des Betriebes oder aber nach Außerbetriebnahme erfolgen.

Das einzelne Nachstellelement 16.1, 16.2 weist wenigstens eine Keilfläche auf. Die Keilfläche ist mit 17.1 bezeichnet und wirkt mit einer komplementär dazu ausgebildeten Keilfläche 18.1 am Innenumfang 14 der Öffnung 11 des Zapfenaufnehmers 7 zusammen. In besonders vorteilhafter Ausbildung umfasst die Nachstelleinrichtung 15 zumindest zwei Nachstellelemente 16.1 und 16.2, die zumindest jeweils eine Keilfläche 17.1, 17.2 umfassen, die mit dazu komplementären Keilflächen 18.1, 18.2 am Innenumfang des Zapfenaufnehmers 7 in Wirkverbindung bringbar sind. Die Keilflächen 18.1 und 18.2 am Innenumfang 14 der Öffnung 11 am Zapfenaufnehmer 7 sind dabei hinsichtlich ihres Verlaufs derart ausgerichtet, dass diese durch eine Richtungskomponente quer oder in einem Winkel zur Erstreckung der Rotationsachse R des Zapfenaufnehmers 7 verlaufend ausgerichtet sind. Die Rotationsachse R des Zapfenaufnehmers 7 entspricht der Mittenachse des Zapfenaufnehmers 7.

Die Figur 2a verdeutlicht dabei in einem Axialschnitt eine Ausführung der Einzelkomponenten der Welle-Nabe-Verbindung 6. Dargestellt ist in Figur 2a in einem Axialschnitt der Zapfenaufnehmer 7 in einer beispielhaften Ausführung mit der Öffnung 11, die sich in Längsrichtung der Mittenachse, die mit der Rotationsachse R zusammenfällt. Ferner dargestellt ist ein Ausschnitt aus der Arbeitswalze 2, insbesondere der Wellenzapfen 8 in Form eines Flachzapfens. Der in der Figur 2b dargestellte Flachzapfen wird in die Öffnung 11 des Zapfenaufnehmers 7 in Pfeilrichtung eingeführt. Zur Verdeutlichung der Richtungen ist beispielhaft ein Koordinatensystem an den Flachzapfen der Arbeitswalze 2 angelegt. Das Koordinatensystem verdeutlicht in der X-Richtung die Längsrichtung, während die Y-Richtung der Querrichtung zu dieser entspricht und die Z-Richtung die Höhenrichtung beschreibt.

Die Figur 3 zeigt in besonders vorteilhafter Ausführung anhand eines achssenkrechten Schnittes die Anordnung der Nachstellelemente 16.1 und 16.2 zwischen dem Flachzapfen und dem Innenumfang 14 der Öffnung 11. Der Zapfenaufnehmer 7 ist dazu lediglich angedeutet und daher nur mittels unterbrochener Linie dargestellt.

In vorteilhafter Ausbildung, hier jedoch nicht dargestellt, ist jeweils an den einander gegenüberliegenden Flachseiten 9, 10 jeweils eine derartige Nachstelleinrichtung vorgesehen.

Die Figur 3 verdeutlicht eine besonders vorteilhafte Ausgestaltung, bei welcher die Nachstellelemente 16.1 und 16.2 derart ausgeführt sind, dass diese durch eine ebene Fläche 19.1 bzw. 19.2 charakterisiert sind, die an einem der miteinander zu verbindenden Komponenten- Wellenzapfen 8 oder Zapfenaufnehmer 7 - an einer dazu komplementären Fläche 29.1, 29.2 zum Anliegen gelangt. Ferner ist das einzelne Nachstellelement 16.1 bzw. 16.2 durch eine der ebenen Fläche gegenüberliegende Keilfläche 17.1 bzw. 17.2 charakterisiert, die mit einer dazu komplementären Keilfläche 18.1, 18.2 an dem jeweils mit dem Nachstellelement 16.1, 16.2 in Wirkverbindung bringbaren Bauteil - dem Zapfenaufnehmer 7 oder dem Wellenzapfen 8 - zum Anliegen gelangt. Dabei ist der Verlauf und die Ausrichtung der Keilfläche 17.1, 17.2 am Nachstellelement 16.1, 16.2 in Einbaulage und die dazu komplementäre Keilfläche 18.1, 18.2 am Zapfenaufnehmer 7 und/oder dem Flachzapfen 8 durch eine Richtungskomponente charakterisiert, die in einem Winkel zu einer Ebene, beschreibbar durch die Rotationsachse R und einer Senkrechten dazu, ausgerichtet ist, vorzugsweise quer zur Rotationsachse R. Die Nachstellelemente 16.1 und 16.2 sind derart angeordnet, dass die Keilflächen 17.1 und 17.2 der beiden Nachstellelemente 16.1 und 16.2 einander entgegengesetzt ausgerichtet sind. Im einfachsten Fall werden gemäß Figur 3 die einzelnen Nachstellelemente 16.1, 16.2 manuell über Stelleinrichtungen 20 von außen über den Zapfenaufnehmer 7 eingestellt. Die Stellkraft wird hier senkrecht zu einer Ebene, die durch die Rotationsachse R und einer Senkrechten zu dieser beschreibbar ist, vorzugsweise in Querrichtung aufgebracht. Die Stellkraft wird über eine Einrichtung 23 aufgebracht und eingestellt, umfassend im dargestellten Fall beispielhaft zwei Spannelemente. Diese bringen die erforderliche Haltekraft zur Einhaltung eines Minimalspiels zwischen Nachstellelement 16.1, 16.2 und Zapfenaufnehmer 7 auf.

Zur Einstellung des Minimalspiels sind die beiden Nachstellelemente 16.1, 16.2 über eine Federeinrichtung 30 in ihrer Position zueinander vorgespannt, wobei die Vorspannkraft zur Stellkraft entgegengesetzt ausgerichtet ist. Die Federeinrichtung 30 ist Bestandteil einer Vorspanneinrichtung 31, welche entgegen der Stelleinrichtung 20 wirkt. Die Federeinheit 30 bewirkt eine Kraft F in Richtung senkrecht zur Rotationsachse R, d.h. der Stellkraft der Stelleinrichtung 20 entgegengerichtet. Die Federeinheit 30 ist dazu zwischen zueinander weisenden Stirnseiten 21.1 und 21.2 der Nachstellelemente 16.1, 16.2 angeordnet. Die den Stirnseiten 21.1 und 21.2 jeweils gegenüberliegenden Stirnseiten 22.1 und 22.2 bilden dabei die Angriffsflächen für die Stelleinrichtung 20.

Vorzugsweise sind die Nachstellelemente 16.1, 16.2 aus einem Material, welches durch eine geringere Härte als die jeweiligen Anschlusselemente - Wellenzapfen 8 und Zapfenaufnehmer 7 - charakterisiert ist. Dadurch wird der Verschleiß in die einfach zu tauschenden Nachstellelemente 16.1, 16.2 verlegt. Bei Verschleiß an den Nachstellelementen 16.1, 16.2 würde sich daher ein Spiel in der Verbindung zwischen Wellenzapfen 8 und Zapfenaufnehmer 7 einstellen. Dies kann nun über die Stelleinrichtung 20 wieder ausgeglichen werden. Die Kraft kann einstellbar sein oder aber konstruktiv vorgegeben.

Die Stelleinrichtung 20 gemäß Figur 3 umfasst zumindest zwei Spannelemente 23.1 und 23.2 in Form von Schrauben, die in den Zapfenaufnehmer 7 einschraubbar sind, wobei die Schraubenachse quer zur Längsrichtung des Zapfenaufnehmers 7 ausgerichtet ist und die jeweilige Schraube direkt am Nachstellelement 16.1 bzw. 16.2 wirksam wird. Die manuelle Nachstellung kann dabei während des Walzenwechsels erfolgen.

Die Figur 3 zeigt Nachstellelemente 16.1, 16.2 mit einer Keilfläche 17.1, 17.2. Denkbar ist auch die in Figur 4 dargestellte Ausführung mit jeweils zwei einander gegenüberliegend angeordneten Keilflächen 17.1 und 19.1, die mit komplementär ausgebildeten Flächenbereichen am Zapfenaufnehmer 7 und dem Wellenzapfen 8 zusammenwirken.

### Bezugszeichenliste

- 1: Antriebsstrang
- 2: Walze, Arbeitswalze, Welle
- 3: Walzwerk
- 4: Antriebsmaschine
- 5: Gelenkwelle
- 6: Welle-Nabe-Verbindung, insbesondere Wellenzapfen-Trefferverbindung
- 7: Zapfenaufnehmer
- 8: Wellenzapfen
- 9: Flachseite
- 10: Flachseite
- 11: Öffnung
- 14: Innenumfang der Öffnung
- 15: Nachstelleinrichtung
- 16.1, 16.2: Nachstellelement
- 17.1, 17.2: Keilfläche des Nachstellelementes
- 18.1, 18.2: Keilfläche
- 19.1, 19.2: Fläche
- 20: Stelleinrichtung
- 21.1, 21.2: Stirnseite
- 22.1, 22.2: Stirnseite
- 23: Einrichtung
- 23.1, 23.2: Spannelemente
- 24.1,24.2: Federelemente
- 29.1, 29.2: Flächen
- 30: Federeinheit
- 31: Vorspanneinrichtung
- R: Rotationsachse

## Patentansprüche

1. Welle-Nabe-Verbindung (6), insbesondere Wellenzapfen-Trefferverbindung für den Einsatz in Walzwerken, wobei zumindest ein Teilbereich einer um eine in Längsrichtung verlaufende Rotationsachse (R) rotierbaren Welle (2) mit einem Zapfenaufnehmer (7) unter Ausbildung eines Verbindungsbereiches formschlüssig ineinandergreifend zueinander angeordnet sind und zwischen Welle (2) und Zapfenaufnehmer (7) eine, zumindest ein Nachstellelement (16.1, 16.2) und eine diesem zugeordnete Stelleinrichtung (20) aufweisende Nachstelleinrichtung (15) vorgesehen ist, wobei das Nachstellelement zumindest eine mit einer der Anschlusskomponenten - Zapfenaufnehmer (7) und/oder Welle (2) bei Drehmomentübertragung zusammenwirkende Keilfläche (17.1, 17.2) umfasst, wobei die einzelne Keilfläche (17.1, 17.2) am Nachstellelement (16.1, 16.2) senkrecht zur Längsrichtung (R) des Zapfenaufnehmers (7) ausgerichtet ist;
**dadurch gekennzeichnet, dass**
die Nachstelleinrichtung (15) zur Einstellung eines vorbestimmten Spiels vorgesehen ist, wobei das einzelne Nachstellelement (16.1, 16.2) als Verschleißplatte ausgebildet ist, welches eine geringere Härte als die Anschlusskomponenten - Zapfenaufnehmer (7) und Welle (2) - aufweist.

2. Welle-Nabe-Verbindung (6) nach Anspruch 1,
**dadurch gekennzeichnet, dass**
die Nachstelleinrichtung (15) zumindest zwei Nachstellelemente (16.1, 16.2) umfasst, die beidseits einer Ebene, die durch die Längsachse (R) des Zapfenaufnehmers (7) und einer Senkrechten zu dieser beschreibbar ist, angeordnet sind.

3. Welle-Nabe-Verbindung (6) nach Anspruch 2,
**dadurch gekennzeichnet, dass**
die einzelnen Nachstellelemente (16.1, 16.2) symmetrisch bezüglich der Ebene angeordnet sind.

4. Welle-Nabe-Verbindung (6) nach einem der Ansprüche 1 bis 3,
**dadurch gekennzeichnet, dass**
die Welle (2) im Verbindungsbereich als Flachzapfen ausgeführt ist, umfassend zwei einander gegenüberliegende Flachseiten (9, 10), wobei jeweils zwischen einer Flachseite (9) und dem Zapfenaufnehmer (7) eine Nachstelleinrichtung (15) angeordnet ist.

5. Welle-Nabe-Verbindung (6) nach einem der Ansprüche 1 bis 4,
**dadurch gekennzeichnet, dass**
zumindest die zum Zapfenaufnehmer (7) weisende Fläche des einzelnen Nachstellelementes(16.1, 16.2) als Keilfläche (17.1, 17.2) ausgebildet ist, die mit einer dazu komplementär ausgeführten Keilfläche (18.1, 18.2) am Innenumfang der Öffnung des Zapfenaufnehmers (7) in Wirkverbindung bringbar ist.

6. Welle-Nabe-Verbindung (6) nach einem der Ansprüche 1 bis 5,
**dadurch gekennzeichnet, dass**
die mit der Welle (2), insbesondere dem Wellenzapfen (8) zusammenwirkende Fläche des Nachstellelementes (16.1, 16.2) als Keilfläche ausgebildet ist, die mit einer dazu komplementär ausgeführten Keilfläche an der Welle bzw. am Wellenzapfen zusammenwirkt.

7. Welle-Nabe-Verbindung (6) nach einem der Ansprüche 1 bis 6,
**dadurch gekennzeichnet, dass**
die Stelleinrichtung (20) derart ausgeführt und angeordnet ist, eine am einzelnen Nachstellelement (16.1, 16.2) wenigstens mittelbar wirksame Stellkraft zur Einstellung des Spiels zwischen Nachstellelement (16.1, 16.2) und Anschlusskomponente (7, 2) aufzubringen.

8. Welle-Nabe-Verbindung (6) nach einem der Ansprüche 1 bis 7,
**dadurch gekennzeichnet, dass**
die Stelleinrichtung (20) mit wenigstens einem der Nachstellelemente (16.1, 16.2) zusammenwirkt, wobei die Stelleinrichtung (20) gemäß zumindest einer der nachfolgend genannten Möglichkeiten oder einer Kombination aus diesen ausgeführt sein kann:
- eine hydraulische Stelleinrichtung
- eine pneumatische Stelleinrichtung
- eine elektronische Stelleinrichtung
- eine mechanische Stelleinrichtung (20).

9. Welle-Nabe-Verbindung (6) nach einem der Ansprüche 1 bis 8,
**dadurch gekennzeichnet, dass**
die Nachstelleinrichtung (15) desweiteren eine Vorspanneinrichtung (31) zum Aufbringen einer Vorspannkraft auf das einzelne Nachstellelement (16.1, 16.2) zwischen Nachstellelement (16.1, 16.2) und zumindest einem der Anschlusselemente - Zapfenaufnehmer (7) und/oder Welle (2)- und/oder einem weiteren Nachstellelement umfasst, wobei die durch die Vorspanneinrichtung (31) aufbringbare Vorspannkraft mit zumindest einer Richtungskomponente entgegen der von der Stelleinrichtung (20) am Nachstellelement (16.1, 16.2) wirksamen Stellkraft ausgerichtet ist.

10. Welle-Nabe-Verbindung (6) nach Anspruch 9,
**dadurch gekennzeichnet, dass**
die Vorspanneinrichtung (31) mit wenigstens einem der Nachstellelemente zusammenwirkt, wobei die Vorpanneinrichtung (31) gemäß zumindest einer der nachfolgend genannten Möglichkeiten oder einer Kombination aus diesen ausgeführt sein kann:
- eine hydraulische Stelleinrichtung
- eine pneumatische Stelleinrichtung
- eine elektronische Stelleinrichtung
- eine mechanische Stelleinrichtung (30).

11. Welle-Nabe-Verbindung (6) nach Anspruch 10,
**dadurch gekennzeichnet, dass**
die Vorspanneinrichtung zumindest eine zwischen Nachstellelement (16.1, 16.2) und Anschlusskomponente und/oder einem weiteren Nachstellelement angeordnete Federeinheit (30) umfasst.

12. Welle-Nabe-Verbindung (6) nach einem der Ansprüche 1 bis 11,
**dadurch gekennzeichnet, dass**
das bei Überschreiten eines vorbestimmten maximal zulässigen Spiels, vorzugsweise 0,4-0,5 mm, eine Einstellung auf ein vorbestimmtes Minimalspiel, vorzugsweise 0,2-0,3mm, einstellbar ist.

13. Antriebsanordnung für ein Walzwerk zum Antrieb zumindest einer Arbeitswalze (2), welche über eine Gelenkwelle (5) mit einer Antriebsmaschine (4) gekoppelt ist, wobei zwischen Gelenkwelle (5) und Arbeitswalze (2) eine Verbindungseinrichtung (6) in Form eines Treffers vorgesehen ist und die spielarme Verbindung zwischen dem Treffer und der Arbeitswalze (2) als Welle-Nabe-Verbindung (6) gemäß einem der Ansprüche 1 bis 12 ausgeführt ist.

## Claims

1. Shaft/hub connection (6), in particular shaft journal/coupling sleeve connection for use in rolling mills, at least one part region of a shaft (2) which can be rotated about a rotational axis (R) which runs in the longitudinal direction being arranged with a journal trunnion (7) being arranged so as to engage into one another in a positively locking manner with the configuration of a connecting region, and an adjusting device (15) which has at least one adjusting element (16.1, 16.2) and an actuating device (20) which is assigned to the latter being provided between the shaft (2) and the journal trunnion (7), the adjusting element comprising at least one wedge face (17.1, 17.2) which, in the case of the transmission of torque, interacts with one of the connector components (journal trunnion (7) and/or shaft (2)), the individual wedge face (17.1, 17.2) on the adjusting element (16.1, 16.2) being oriented perpendicularly with respect to the longitudinal direction (R) of the journal trunnion (7);
**characterized in that**
the adjusting device (15) is provided for setting a predefined play, the individual adjusting element (16.1, 16.2) being configured as a wear plate which has a lower hardness than the connector components (journal trunnion (7) and a shaft (2)).

2. Shaft/hub connection (6) according to Claim 1,
**characterized in that**
the adjusting device (15) comprises at least two adjusting elements (16.1, 16.2) which are arranged on both sides of a plane which can be described by way of the longitudinal axis (R) of the journal trunnion (7) and a perpendicular with respect to the former.

3. Shaft/hub connection (6) according to Claim 2,
**characterized in that**
the individual adjusting elements (16.1, 16.2) are arranged symmetrically with regard to the plane.

4. Shaft/hub connection (6) according to one of Claims 1 to 3,
**characterized in that**
the shaft (2) is configured in the connecting region as a flat journal, comprising two flat sides (9, 10) which lie opposite one another, and adjusting device (15) being arranged in each case between a flat side (9) and the journal trunnion (7).

5. Shaft/hub connection (6) according to one of Claims 1 to 4,
**characterized in that**
at least that face of the individual adjusting element (16.1, 16.2) which points towards the journal trunnion (7) is configured as a wedge face (17.1, 17.2) which can be brought into an operative connection with a wedge face (18.1, 18.2) of complementary configuration with respect to it on the inner circumference of the opening of the journal trunnion (7).

6. Shaft/hub connection (6) according to one of Claims 1 to 5,
**characterized in that**
that face of the adjusting element (16.1, 16.2) which interacts with the shaft (2), in particular the shaft journal (8), is configured as a wedge face which interacts with a wedge face of complementary configuration with respect to it on the shaft or on the shaft journal.

7. Shaft/hub connection (6) according to one of Claims 1 to 6,
**characterized in that**
the actuating device (20) is configured and arranged so as to apply an actuating force which is active at least indirectly on the individual adjusting element (16.1, 16.2) in order to set the play between the adjusting element (16.1, 16.2) and connector component (7, 2).

8. Shaft/hub connection (6) according to one of Claims 1 to 7,
**characterized in that**
the actuating device (20) interacts with at least one of the adjusting elements (16.1, 16.2), it being possible for the actuating device (20) to be configured according to at least one of the possibilities mentioned in the following text or a combination thereof:
- a hydraulic actuating device,
- a pneumatic actuating device,
- an electronic actuating device,
- a mechanical actuating device (20).

9. Shaft/hub connection (6) according to one of Claims 1 to 8,
**characterized in that,**
furthermore, the adjusting device (15) comprises a prestressing device (31) for applying a prestressing force to the individual adjusting element (16.1, 16.2) between the adjusting element (16.1, 16.2) and at least one of the connector elements (journal trunnion (7) and/or shaft (2)) and/or a further adjusting element, the prestressing force which can be applied by way of the prestressing device (31) being oriented with at least one directional component counter to the actuating force which acts by way of the actuating device (20) on the adjusting element (16.1, 16.2).

10. Shaft/hub connection (6) according to Claim 9,
**characterized in that**
the prestressing device (31) interacts with at least one of the adjusting elements, it being possible for the prestressing device (31) to be configured according to at least one of the possibilities mentioned in the following text or a combination thereof:
- a hydraulic actuating device,
- a pneumatic actuating device,
- an electronic actuating device,
- a mechanical actuating device (20).

11. Shaft/hub connection (6) according to Claim 10,
**characterized in that**
the prestressing device comprises at least one spring unit (30) which is arranged between the adjusting element (16.1, 16.2) and the connector component and/or a further adjusting element.

12. Shaft/hub connection (6) according to one of Claims 1 to 11,
**characterized in that,**
in the case of a predefined maximum permissible play being exceeded, preferably 0.4-0.5 mm, a setting can be set to a predefined minimum play, preferably 0.2-0.3 mm.

13. Drive arrangement for a rolling mill for driving at least one working roll (2) which is coupled via an articulated shaft (5) to a drive machine (4), a connecting device (6) in the form of a coupling sleeve being provided between the articulated shaft (5) and the working roll (2), and the low-play connection between the coupling sleeve and the working roll (2) being configured as a shaft/hub connection (6) according to one of Claims 1 to 12.

## Revendications

1. Liaison arbre-moyeu (6), en particulier la liaison par correspondance arbre-moyeu pour l'utilisation dans des laminoirs, au moins une région partielle d'un arbre (2) pouvant tourner autour d'un axe de rotation (R) s'étendant dans la direction longitudinale étant disposée avec un organe de logement de tourillon (7) de manière à s'engager l'un dans l'autre par correspondance de formes en réalisant une région de connexion, et entre l'arbre (2) et l'organe de logement de tourillon (7) étant prévu un dispositif de réglage (15) présentant au moins un élément de réglage (16.1, 16.2) et un actionneur (20) associé à celui-ci, l'élément de réglage comprenant au moins une surface de clavette (17.1, 17.2) coopérant avec l'un des composants de raccordement constitués par l'organe de logement de tourillon (7) et/ou l'arbre (2) lors du transfert de couple, la surface de clavette individuelle (17.1, 17.2) au niveau de l'élément de réglage (16.1, 16.2) étant orientée perpendiculairement à la direction longitudinale (R) de l'organe de logement de tourillon (7) ;
**caractérisée en ce que**
le dispositif de réglage (15) est prévu pour ajuster un jeu prédéterminé, l'élément de réglage individuel (16.1, 16.2) étant réalisé sous forme de plaque d'usure qui présente une plus faible dureté que les composants de raccordement constitués par l'organe de logement de tourillon (7) et l'arbre (2).

2. Liaison arbre-moyeu (6) selon la revendication 1,
**caractérisée en ce que**
le dispositif de réglage (15) comprend au moins deux éléments de réglage (16.1, 16.2) qui sont disposés de part et d'autre d'un plan qui peut être décrit par l'axe longitudinal (R) de l'organe de logement de tourillon (7) et une perpendiculaire à celui-ci.

3. Liaison arbre-moyeu (6) selon la revendication 2,
**caractérisée en ce que**
les éléments de réglage individuels (16.1, 16.2) sont disposés symétriquement par rapport au plan.

4. Liaison arbre-moyeu (6) selon l'une quelconque des revendications 1 à 3,
**caractérisée en ce que**
l'arbre (2) dans la région de connexion est réalisé sous forme de tourillon plat comprenant deux côtés plats opposés l'un à l'autre (9, 10), un dispositif de réglage (15) étant à chaque fois disposé entre un côté plat (9) et l'organe de logement de tourillon (7).

5. Liaison arbre-moyeu (6) selon l'une quelconque des revendications 1 à 4,
**caractérisée en ce**
**qu'**au moins la surface tournée vers l'organe de logement de tourillon (7) de l'élément de réglage individuel (16.1, 16.2) est réalisée sous forme de surface de clavette (17.1, 17.2) qui peut être amenée en liaison fonctionnelle avec une surface de clavette réalisée de manière complémentaire (18.1, 18.2) au niveau de la périphérie intérieure de l'ouverture de l'organe de logement de tourillon (7).

6. Liaison arbre moyeu (6) selon l'une quelconque des revendications 1 à 5,
**caractérisée en ce que**
la surface de l'élément de réglage (16.1, 16.2) coopérant avec l'arbre (2), en particulier le tourillon d'arbre (8), est réalisée sous forme de surface de clavette qui coopère avec une surface de clavette réalisée de manière complémentaire au niveau de l'arbre ou au niveau du tourillon d'arbre.

7. Liaison arbre-moyeu (6) selon l'une quelconque des revendications 1 à 6,
**caractérisée en ce que**
l'actionneur (20) est réalisé et disposé de manière à appliquer une force de réglage agissant au moins de manière indirecte au niveau de l'élément de réglage individuel (16.1, 16.2), pour ajuster le jeu entre l'élément de réglage (16.1, 16.2) et les composants de raccordement (7, 2).

8. Liaison arbre-moyeu (6) selon l'une quelconque des revendications 1 à 7,
**caractérisée en ce que**
l'actionneur (20) coopère avec au moins l'un des éléments de réglage (16.1, 16.2), l'actionneur (20) pouvant être réalisé selon au moins l'une des possibilités citées ci-dessous ou selon une combinaison de celles-ci :
- un actionneur hydraulique,
- un actionneur pneumatique,
- un actionneur électronique,
- un actionneur mécanique (20).

9. Liaison arbre-moyeu (6) selon l'une quelconque des revendications 1 à 8,
**caractérisée en ce que**
le dispositif de réglage (15) comprend en outre un dispositif de précontrainte (31) pour appliquer une force de précontrainte sur l'élément de réglage individuel (16.1, 16.2) entre l'élément de réglage (16.1, 16.2) et au moins l'un des éléments de raccordement constitués par l'organe de logement de tourillon (7) et/ou l'arbre (2), et/ou un élément de réglage supplémentaire, la force de précontrainte pouvant être appliquée par le dispositif de précontrainte (31) étant orientée avec au moins une composante directionnelle dans le sens opposé à la force de réglage appliquée par l'actionneur (20) sur l'élément de réglage (16.1, 16.2) .

10. Liaison arbre-moyeu (6) selon la revendication 9,
**caractérisée en ce que**
le dispositif de précontrainte (31) coopère avec au moins l'un des éléments de réglage, le dispositif de précontrainte (31) pouvant être réalisé selon au moins l'une des possibilités citées ci-dessous ou une combinaison de celles-ci :
- un actionneur hydraulique,
- un actionneur pneumatique,
- un actionneur électronique,
- un actionneur mécanique (30).

11. Liaison arbre-moyeu (6) selon la revendication 10,
**caractérisée en ce que**
le dispositif de précontrainte comprend au moins une unité de ressort (30) disposée entre l'élément de réglage (16.1, 16.2) et les composants de raccordement et/ou un élément de réglage supplémentaire.

12. Liaison arbre-moyeu (6) selon l'une quelconque des revendications 1 à 11,
**caractérisée en ce que**
dans le cas d'un dépassement d'un jeu prédéterminé maximal admissible, de préférence de 0,4-0,5 mm, un ajustement à un jeu minimal prédéterminé, de préférence de 0,2-0,3 mm, peut être ajusté.

13. Agencement d'entraînement pour un laminoir pour entraîner au moins un rouleau de travail (2) qui est accouplé par le biais d'un arbre articulé (5) à une machine d'entraînement (4), un dispositif de liaison (6) sous la forme d'un dispositif de mise en correspondance étant prévu entre l'arbre articulé (5) et le rouleau de travail (2), et la liaison sans jeu entre le dispositif de mise en correspondance et le rouleau de travail (2) étant réalisée sous forme de liaison arbre-moyeu (6) selon l'une quelconque des revendications 1 à 12.
